# EUROPÄISCHE PATENTANMELDUNG

(11) **EP 2 961 019 A1**
(43) Veröffentlichungstag der Anmeldung: **30.12.2015**
(21) Anmeldenummer: 15173608.9
(22) Anmeldetag: 24.06.2015
(51) Int. Cl.: H02H 3/00, B62D 1/06, B60R 16/027, H02H 3/08, H02H 3/093

(54) **ÜBERSTROMSCHUTZEINRICHTUNG FÜR EIN KRAFTFAHRZEUG, ELEKTRISCHE VERBINDUNGSVORRICHTUNG SOWIE KRAFTFAHRZEUG**

(30) Priorität: 26.06.2014 DE 102014108941
(71) Anmelder: Valeo Schalter und Sensoren GmbH, 74321 Bietigheim-Bissingen (DE)
(72) Erfinder: Poslowsky, Georg, 74321 Bietigheim-Bissingen (DE); Mueller, Stefan, 74321 Bietigheim-Bissingen (DE)

(57) **Zusammenfassung**

Die Erfindung betrifft eine Überstromschutzeinrichtung (16) für ein Kraftfahrzeug, mit einer Erfassungseinheit (4) zum Erfassen einer Stromstärke eines durch eine Versorgungsleitung (2) fließenden elektrischen Stroms, wobei die Versorgungsleitung (2) eine elektrische Energiequelle des Kraftfahrzeugs mit einem elektrischen Verbraucher des Kraftfahrzeugs elektrisch verbindet und mit einer Schalteinheit (3) zum Trennen der Versorgungsleitung (2), falls die mit der Erfassungseinheit (4) erfasste Stromstärke einen vorbestimmten Schwellenwert überschreitet und mit einer Steuereinheit (5) zum Verarbeiten der mit der Erfassungseinheit (4) erfassten elektrischen Stromstärke und zum Ansteuern der Schalteinheit (3), wobei die Steuereinheit (5) dazu ausgelegt ist, die Schalteinheit (3) anzusteuern, falls die mit der Erfassungseinheit (4) erfasste Stromstärke den vorbestimmten Schwellenwert überschreitet, wobei der vorgegebenen Schwellenwert in der Steuereinheit (5) hinterlegt ist und die Steuereinheit (5) dazu ausgelegt ist, den Schwellenwert in Abhängigkeit von einem externen Stellsignal zu verändern.

## Beschreibung

Die vorliegende Erfindung betrifft eine Überstromschutzeinrichtung für ein Kraftfahrzeug mit einer Erfassungseinheit zum Erfassen einer Stromstärke eines durch eine Versorgungsleitung fließenden elektrischen Stroms, wobei die Versorgungsleitung eine elektrische Energiequelle des Kraftfahrzeugs mit einem elektrischen Verbraucher des Kraftfahrzeugs elektrisch verbindet und mit einer Schalteinheit zum Trennen der Versorgungsleitung, falls die mit der Erfassungseinheit erfasste Stromstärke einen vorbestimmten Schwellenwert überschreitet, und mit einer Steuereinheit zum Verarbeiten der mit der Erfassungseinheit erfassten elektrischen Stromstärke und zum Ansteuern der Schalteinheit, wobei die Steuereinheit dazu ausgelegt ist, die Schalteinheit anzusteuern, falls die mit der Erfassungseinheit erfasste Stromstärke den vorbestimmten Schwellenwert überschreitet. Darüber hinaus betrifft die vorliegende Erfindung eine elektrische Verbindungsvorrichtung. Schließlich betrifft die vorliegende Erfindung ein Kraftfahrzeug mit einer derartigen elektrischen Verbindungsvorrichtung.

Das Interesse richtet sich vorliegend insbesondere auf Überstromschutzeinrichtungen für elektrische Versorgungsleitungen. Derartige Überstromschutzeinrichtungen umfassen üblicherweise eine Erfassungseinheit zum Erfassen eines Überstroms in der Versorgungsleitung und eine Schalteinheit zum Trennen der Versorgungsleitung, falls der durch die Versorgungsleitung fließende Strom einen Überstromwert erreicht. Aus dem Stand der Technik sind zur Absicherung einer Spannungsquelle und/oder an sie angeschlossene Leitungen und Verbraucher gegen Überlasten durch zu hohen Stromfluss unterschiedliche Lösungen bekannt. Beispielsweise werden selbst rückstellende Sicherungen verwendet, die nach Verschwinden der Überlast den Stromfluss selbst wiederherstellen. Derartige selbst rückstellende Sicherungen können Kaltleiter, Bimetallschalter, elektromagnetisch betätigbare Schalter, Halbleiterschaltungen oder dergleichen umfassen. Des Weiteren sind aus dem Stand der Technik nicht selbst rückstellende Sicherungen, die nach Verschwinden der Überlast den Stromfluss nicht selbst wiederherstellen können, bekannt. Die Schalteinheit kann jedoch durch manuelle Rückstellung und/oder durch Rückstellung in Folge eines Signals von außerhalb wieder geschlossen werden. Solche Sicherungen, die nicht selbst rückstellend ausgebildet sind, können beispielsweise thermische Schmelzelemente, elektromagnetisch betätigbare Schalter, Halbleiterschaltungen oder dergleichen umfassen.

Die Verwendung einer Halbleiterschaltung für eine Überstromschutzeinrichtung weist dabei generell verschiedene Vorteile auf. Beispielsweise tritt kein mechanischer Verschleiß bei der Schalteinheit auf. Zudem ist eine sehr hohe Anzahl von Auslösevorgängen möglich. Ferner ist ein zeitlich weit variierbares, aber auch sehr schnelles Auslöseverhalten sowohl bei großen als auch bei kleinen Strömen möglich. Halbleiterschaltungen weisen in diesem Zusammenhang aber auch verschiedene bekannte generelle Nachteile auf. Beispielsweise weisen die Halbleiterschaltungen einen hohen Eigenstromverbrauch auf. Zudem ist eine entsprechende Überwachung bzw. Vorkehrung gegen Überlast bzw. Beschädigung der verwendeten Schalteinheiten notwendig. Weiterhin sind derartige Halbleiterschaltungen für Überstromschutzeinrichtungen oft sehr komplex aufgebaut.

Ferner sind aus dem Stand der Technik zahlreiche Halbleiterschaltungen bekannt, mit denen die Funktionalität einer selbst rückstellenden Sicherung oder einer nicht selbst rückstellenden Sicherung bereitgestellt werden kann. Diese Halbleiterschaltungen weisen aber üblicherweise einen verhältnismäßig hohen Eigenstrombedarf im leitenden Zustand auf. Aus diesem Grund sind derartige Halbleiterschaltungen auch in einem Ruhezustand für batterie- oder akkumulatorversorgte Anwendungen, wie beispielsweise im Kraftfahrzeug-Bordnetzbereich, nicht geeignet. Des Weiteren bestehen keine oder nicht hinreichende Maßnahmen gegen eine dauerhafte Überlast des Schaltelements.

Auch im Kraftfahrzeugbereich werden entsprechende Überstromschutzeinrichtungen verwendet, um elektrische Verbraucher des Kraftfahrzeugs vor einem zu hohen Stromfluss zu schützen. Insbesondere in Bereichen, in denen der Bauraum begrenzt ist, stellt die Anordnung einer Überstromschutzeinrichtung ein Problem dar. Dies ist beispielsweise bei elektrischen Verbrauchern der Fall, die in einem Lenkrad des Kraftfahrzeugs angeordnet sind. Derartige elektrische Verbraucher, wie beispielsweise ein Steuergerät, werden über eine entsprechende Wickelfederkassette, die sich von einer Lenksäule zu dem zu der Lenksäule drehbaren Lenkrad erstreckt, mit elektrischer Energie versorgt.

In diesem Zusammenhang beschreibt die US 6,268,588 B1 eine Heizungsanordnung für ein Lenkrad eines Kraftfahrzeugs. Die Anordnung umfasst ein Heizelement, das mit einer elektrischen Spannung versorgt wird. Zudem umfasst die Anordnung einen Temperatursensor zum Erfassen der Temperatur des Lenkrads. Falls die Temperatur einen vorbestimmten Schwellenwert überschreitet, wird die Spannungszufuhr zu dem Heizelement unterbunden.

Darüber hinaus beschreit die EP 2 325 055 A2 eine Anordnung mit mindestens einem Wickelband zur Versorgung von elektrischen Bauelementen an einem drehbaren Bauteil. Das Wickelband kann insbesondere zwischen einem drehbaren Lenkrad und einem ortsfesten Bauteil der Fahrzeugkarosserie zur Versorgung des Lenkrads mit elektrischer Energie verwendet werden. Zudem umfasst die Anordnung Mittel zum Erfassen eines Werts eines durch das Wickelband fließenden elektrischen Stroms.

Ferner ist aus der DE 10 2011 122 342 A1 eine Anordnung mit einer Lenksäule und einem relativ zur Lenksäule drehbaren Lenkrad bekannt, wobei in und/oder an dem Lenkrad zumindest ein elektrischer Verbraucher angeordnet ist, der über eine elektrische Versorgungsleitung mit elektrischer Energie versorgbar ist. Zudem ist eine Schalteinheit vorgesehen, über welche der Verbraucher mit einer Spannungsquelle koppelbar und somit ein- und ausschaltbar ist. Hierbei ist das Lenkrad frei von Schaltelementen für das Ein- und Ausschalten des Verbrauchers.

Eine Übertragungsvorrichtung zum Übertragen eines elektrischen Stroms zu einer Komponente eines Lenkrads eines Kraftfahrzeugs ist aus der DE 10 2011 075 593 A1 bekannt. Die Übertragungsvorrichtung umfasst eine Temperaturbestimmungsvorrichtung zum Bestimmen der Temperatur eines Leiterelements. Des Weiteren ist eine Überwachungsvorrichtung zum Übermitteln der Stromstärke eines durch das Leiterelement fließenden Stroms vorgesehen. Bei Überschreiten eines vorgebbaren Grenzwerts der Temperatur wird ein Strom, der durch das Leiterelement fließt, reduziert oder unterbrochen.

Darüber hinaus beschreibt die DE 100 57 793 A1 eine Uhrfeder zum Antreiben eines geheizten Lenkrads mit einer zwischen dem Heizelement und einer Energiequelle für das Heizelement in Reihe geschalteten wiedereinstellbaren Sicherung. Falls die bestimmte Strombegrenzung überschritten wird, schaltet sich die Sicherung aus und unterbricht den an das Heizelement Energie liefernden Kreislauf. Nach dem Abkühlen der wiedereinstellbaren Sicherung wird die Verbindung zwischen dem Heizelement und der Energiequelle für das Heizelement durch die wiedereinstellbare Sicherung automatisch wiederhergestellt. Dabei ist die Sicherung in die Uhrfeder eingebaut.

Es ist Aufgabe der Erfindung, eine Lösung aufzuzeigen, wie ein elektrischer Verbraucher, der in und/oder an einem Lenkrad eines Kraftfahrzeugs angeordnet ist, effektiver vor Überströmen geschützt werden kann.

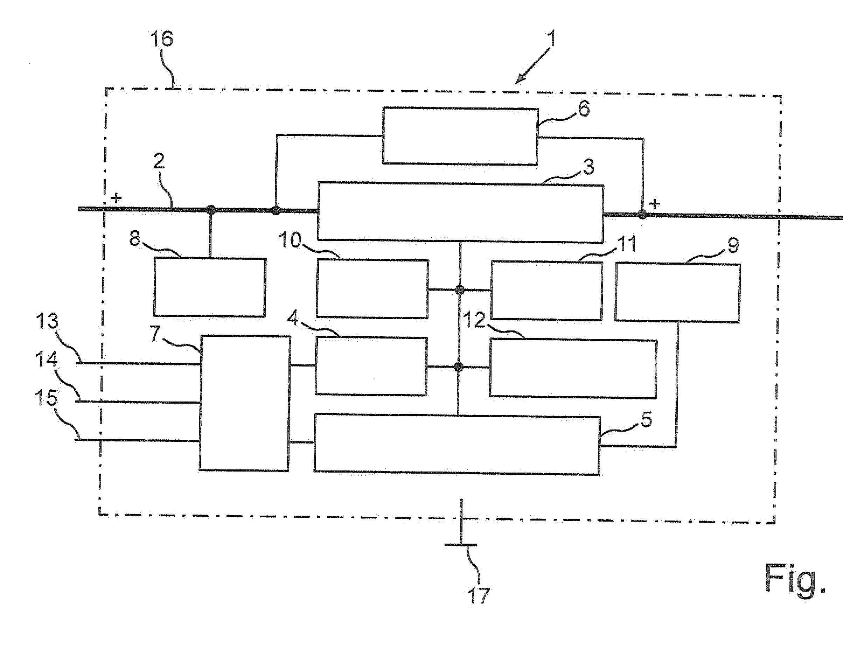

Diese Aufgabe wird erfindungsgemäß durch eine Überstromschutzeinrichtung, durch eine elektrische Verbindungsvorrichtung sowie durch ein Kraftfahrzeug mit den Merkmalen gemäß dem jeweiligen unabhängigen Patentanspruch gelöst. Vorteilhafte Ausführungen der Erfindung sind Gegenstand der abhängigen Patentansprüche, der Beschreibung und der Figur.

Eine erfindungsgemäße Überstromschutzeinrichtung für ein Kraftfahrzeug umfasst eine Erfassungseinheit zum Erfassen einer Stromstärke eines durch eine Versorgungsleitung fließenden elektrischen Stroms, wobei die Versorgungsleitung eine elektrische Energiequelle des Kraftfahrzeugs mit einem elektrischen Verbraucher des Kraftfahrzeugs elektrisch verbindet und eine Schalteinheit zum Trennen der Versorgungsleitung, falls die mit der Erfassungseinheit erfasste Stromstärke einen vorbestimmten Schwellenwert überschreitet, eine Steuereinheit zum Verarbeiten der mit der Erfassungseinheit erfassten elektrischen Stromstärke und zum Ansteuern der Schalteinheit, wobei die Steuereinheit dazu ausgelegt ist, die Schalteinheit anzusteuern, falls die mit der Erfassungseinheit erfasste Stromstärke den vorbestimmten Schwellenwert überschreitet und wobei der vorgegebenen Schwellenwert in der Steuereinheit hinterlegt ist und die Steuereinheit dazu ausgelegt ist, den Schwellenwert in Abhängigkeit von einem externen Stellsignal zu verändern.

Erfindungsgemäß wird also eine Überstromschutzeinrichtung, bei welcher der Schwellenwert für die elektrische Stromstärke eingestellt werden kann, bereitgestellt. Im Vergleich zu Überstromschutzeinrichtungen, die beispielsweise die Versorgungsleitung ab einer vorbestimmten Temperatur trennen, kann eine höhere Sicherheit erreicht werden. Mit der Versorgungsleitung kann ein elektrischer Verbraucher, der in und/oder an dem Lenkrad des Kraftfahrzeugs angeordnet ist, mit elektrischer Energie versorgt werden. Ein derartiger elektrischer Verbraucher kann beispielsweise ein Steuergerät mit Bedienelementen sein, mit dem Bedieneingaben am Lenkrad erfasst und ausgewertet werden. Der elektrische Verbraucher wird über die Versorgungsleitung mit elektrischer Energie von der elektrischen Energiequelle des Kraftfahrzeugs versorgt. Die Versorgungsleitung erstreckt sich dabei von einem feststehenden Teil der Lenksäule, insbesondere einem Mantelrohr, zu dem Lenkrad des Kraftfahrzeugs. Die Versorgungsleitung kann beispielsweise als Wickelfeder bzw. als Wickelfederkassette ausgebildet sein.

Die Überstromschutzeinrichtung umfasst eine Steuereinheit zum Verarbeiten der mit der Erfassungseinheit erfassten elektrischen Stromstärke und zum Ansteuern der Schalteinheit. Die Steuereinheit kann beispielsweise als Logikschaltung ausgebildet sein, die mehrere Logikgatter umfasst. Alternativ dazu kann die Steuereinheit als Recheneinheit bzw. als Mikrocontroller ausgebildet sein. Die Steuereinheit kann dazu ausgebildet sein, die von der Erfassungseinheit erfassten Sensorsignale entsprechend auszuwerten und mit dem Schwellenwert zu vergleichen. Weiterhin kann sie ein entsprechendes Steuersignal zum Ansteuern der Schalteinheit ausgeben. Insbesondere ist die Steuereinheit ebenfalls als Halbleiterbauelement ausgebildet und auf dem Substrat der Überstromschutzeinrichtung angeordnet. Durch die Steuereinheit kann eine zuverlässige Ansteuerung der Schalteinheit und somit ein zuverlässiger Überstromschutz bereitgestellt werden.

Der Schwellenwert kann in der Steuereinheit und insbesondere in einer Speichereinheit der Steuereinrichtung gespeichert sein. Zudem kann der Schwellenwert durch ein Stellsignal eingestellt werden. Dies Stellsignal kann beispielsweise durch eine Bedienangabe einer Bedienperson bereitgestellt werden. Alternativ oder zusätzlich kann das Stellsignal von einem Steuergerät des Kraftfahrzeugs bereitgestellt werden. Somit kann der Schwellenwert, ab dem die Versorgungsleitung getrennt wird, in Abhängigkeit von dem Stellsignal an einen aktuellen Betriebszustand einer Komponente des Kraftfahrzeugs angepasst werden. Es kann beispielsweise ein erstes Stellsignal ausgegeben werden, falls sich das Kraftfahrzeug bzw. eines oder mehrere Steuergeräte des Kraftfahrzeugs in einem Normalbetrieb befinden. Ein zweites Stellsignal kann ausgegeben werden, falls sich das Kraftfahrzeug bzw. eines oder mehrere Steuergeräte des Kraftfahrzeugs in einem Ruhezustand befinden.

In einer Ausführungsform ist die Steuereinheit dazu ausgelegt, die Schalteinheit nach einer vorbestimmten zeitlichen Dauer anzusteuern, falls die mit der Erfassungseinheit erfasste Stromstärke den vorbestimmten Schwellenwert überschreitet. Beispielsweise kann die Steuereinheit die Schalteinheit nach einer vorbestimmten Verzögerungszeit ansteuern. Hier kann auch ein Schwellenwert für ein Integral der Stromstärke über der Zeit vorgegeben werden. Somit kann ein wesentlicher selektiveres und genauer definierbares zeitliches Auslöseverhalten im Vergleich zu passiven Lösungen, wie beispielsweise Schmelzsicherungen, Kaltleitersicherungen, oder dergleichen erreicht werden. Darüber hinaus kann die Überstromschutzeinrichtung robuster gegenüber Stromspitzen sein.

Bevorzugt ist die Steuereinheit zusätzlich dazu ausgelegt, die vorbestimmte zeitliche Dauer in Abhängigkeit von dem Stellsignal anzupassen. Die zeitliche Dauer kann somit ebenfalls, beispielsweise durch ein externes Stellsignal, einstellbar sein. Somit kann im Vergleich zu bekannten Lösungen eine wesentlich selektivere und zudem genauer definierbare Überstromabschaltschwelle bereitgestellt werden. Bei dem Einstellen der Überstromabschaltschwelle können Toleranzen in Folge der Fertigung der Schalteinheit und/oder Temperatureinflüsse berücksichtigt werden.

Bevorzugt ist die Überstromschutzeinrichtung elektrisch mit der Versorgungsleitung verbindbar und die Überstromschutzeinrichtung ist mit elektrischer Energie aus der Versorgungsleitung versorgbar. Beispielsweise kann die Überstromschutzeinrichtung derart ausgebildet sein, dass sie mit einer positiven Spannung, beispielsweise von einem Pluspol einer Fahrzeugbatterie, versorgt werden kann. Alternativ dazu kann die Überstromschutzeinrichtung derart ausgestaltet sein, dass sie mit einer negativen Spannung, beispielsweise von einem Minuspol der Fahrzeugbatterie, versorgt werden kann. Insbesondere kann die Überstromschutzeinrichtung einen entsprechenden Spannungswandler umfassen, mit dem die von der Fahrzeugbatterie bereitgestellte elektrische Spannung gewandelt werden kann. Mit dieser gewandelten Spannung können die Komponenten der Überstromschutzeinrichtung, insbesondere die Erfassungseinheit und die Schalteinheit, mit elektrischer Energie versorgt werden.

In einer weiteren Ausführungsform sind die Erfassungseinheit, die Steuereinheit und die Schalteinheit als Halbleiterbauelemente ausgebildet und auf einem gemeinsamen Substrat angeordnet. Mit anderen Worten wird also eine halbleiterbasierte Überstromschutzeinrichtung bereitgestellt. Die Schalteinheit kann dabei beispielsweise einen Halbleiterschalter umfassen. Die Erfassungseinheit kann als entsprechender Stromsensor ausgebildet sein, mit dem die elektrische Stromstärke in der Versorgungsleitung erfasst werden kann. Die Erfassungseinheit ist ebenfalls als Halbleiterbauelement ausgebildet. Beispielsweise kann die Erfassungseinheit einen elektrischen Widerstand aufweisen, an dem ein Spannungsabfall gemessen wird. Aus dem elektrischen Widerstand und dem Spannungsabfall kann die elektrische Stromstärke berechnet werden. Alternativ oder zusätzlich kann die Erfassungseinheit als Hall-Sensor ausgebildet sein. Die Erfassungseinheit und die Schalteinheit sind auf einem gemeinsamen Halbleitersubstrat angeordnet. Insbesondere können die Erfassungseinheit und die Schalteinheit in einem gemeinsamen Herstellungsverfahren hergestellt sein. Somit kann eine besonders Bauraum sparende Überstromschutzeinrichtung bereitgestellt werden.

Weiterhin ist es vorteilhaft, wenn die Steuereinheit dazu ausgelegt ist, einen Schaltzustand der Schalteinheit, welcher beschreibt, ob die Versorgungsleitung durch die Schalteinheit getrennt oder geschlossen ist, zu erfassen und den erfassten Schaltzustand in einem Statussignal auszugeben. Mit der Steuereinheit kann also überprüft werden, ob die Schalteinheit geöffnet oder geschlossen ist. Diese Information kann in Form des Statussignals ausgegeben werden. Auf diese Weise kann der Schaltzustand der Schalteinheit mit einem externen, das heißt außerhalb der Überstromschutzeinrichtung angeordneten, Diagnosegerät überprüft werden.

In einer Ausgestaltung ist die Steuereinheit dazu ausgelegt, die Schalteinheit in Abhängigkeit von einem externen Steuersignal anzusteuern. Somit kann beispielsweise durch das externe Steuersignal die Rückstellung der Unterbrechung der Versorgungsspannung möglich werden, wenn die Schalteinheit in Folge des externen Steuersignals wieder geschlossen wird. Dieses externe Steuersignal kann von einer externen Steuereinrichtung an die Überstromschutzeinrichtung übertragen werden. Somit können beispielsweise in einem weiten Auslösestrombereich, beispielsweise von 1 mA bis über 10 A, herstellbare Überstromabschaltschwellen bereitgestellt werden. Dieser Strombereich kann auch geringer gewählt sein. Die Steuereinheit kann auch dazu ausgelegt sein, dass eine Rückstellung der Schalteinheit automatisch erfolgt. Hierbei kann beispielsweise nach einem Öffnen der Schalteinheit, bei der die Versorgungsleitung getrennt wird, die Schalteinheit mittels der Steuereinheit nach einer vorbestimmten zeitlichen Dauer mittels eines entsprechenden Steuersignals automatisch wieder geschlossen werden.

Bevorzugt umfasst die Schalteinheit einen Metall-Oxid-Halbleiter-Feldeffekttransistor. Mit anderen Worten ist die Schalteinheit als MOSFET ausgebildet. Dabei kann die Schalteinheit als n-Kanal MOSFET oder als p-Kanal MOSFET ausgebildet sein. Zudem kann die Schalteinheit als selbst sperrender MOSFET oder als selbst leitender MOSFET ausgebildet sein. Somit kann eine kostengünstige Schalteinheit bereitgestellt werden.

Bevorzugt ist die Schalteinheit derart ausgelegt, dass bei der mittels der Schalteinheit getrennten Versorgungsleitung ein vorbestimmter Spannungsabfall entlang der Schalteinheit vorliegt. Insbesondere ist die Schalteinheit im gesperrten, also im ausgelösten bzw. abgeschalteten Zustand hochohmig ausgebildet. Das heißt es liegt im Vergleich zur Versorgungsspannung annähernd der volle Spannungsabfall an der Schalteinheit an. Dabei kann die Schalteinheit auch derart ausgebildet sein, dass sie im geöffneten Zustand einen geringen Eigenstromverbrauch aufweist. Die Schalteinheit kann beispielsweise so ausgebildet sein, dass sie im gesperrten Zustand einen Eigenstromverbrauch weniger als 20 µA aufweist. Somit kann die Schalteinheit besonders energiesparend betrieben werden.

Weiterhin ist die Schalteinheit bevorzugt derart ausgelegt, dass bei der mittels der Schalteinheit geschlossenen Versorgungsleitung ein vorbestimmter Spannungsabfall entlang der Schalteinheit vorliegt. Insbesondere ist die Schalteinheit im leitenden, also im durchgeschalteten Zustand, niederohmig ausgebildet. Das heißt es liegt im Vergleich zur Versorgungsspannung nahezu kein Spannungsabfall an der Schalteinheit an. Weiterhin kann die Schalteinheit derart ausgelegt sein, dass sie im leitenden Zustand einen geringen Eigenstromverbrauch aufweist. Dieser kann beispielsweise weniger als 50 µA bei einem Laststrom von 0,5 A betragen. In einer weiteren Anwendung kann der Eigenstromverbrauch einige mA bei einem Laststrom von 10 A betragen. In diesen Fällen befindet sich der elektrische Verbraucher in einem Normalbetrieb. Alternativ oder zusätzlich kann der Eigenstromverbrauch in einem Ruhebetrieb des elektrischen Verbrauchers weniger als 20 µA bei einem Laststrom von 1 mA sein. Somit kann die Schalteinheit energieeffizient betrieben werden.

Weiterhin ist es vorteilhaft, wenn die Überstromschutzeinrichtung eine Überspannungsschutzeinheit zum Vermeiden einer an der Schalteinheit anliegenden Überspannung umfasst. Bevorzugt ist die Überspannungsschutzeinheit ebenfalls als Halbleiterbauelement ausgebildet und auf dem Substrat der Überstromschutzeinrichtung angeordnet. Zudem kann die Überstromschutzeinrichtung eine ESD-Schutzeinheit umfassen, die dazu ausgebildet sein, eine Beschädigung der Schalteinheit in Folge von elektrostatischer Entladung zu vermeiden. Somit kann die Schalteinheit besonders zuverlässig vor einer Überspannung bzw. vor elektrostatischer Entladung geschützt werden. Somit kann ein zuverlässiger Betrieb der Schalteinheit und somit der Überstromschutzeinrichtung ermöglicht werden.

In einer weiteren Ausführungsform umfasst die Überstromschutzeinrichtung einen Temperatursensor zum Erfassen der Temperatur der Versorgungsleitung und/oder der Schalteinheit. Auch der Temperatursensor kann insbesondere als Halbleiterbauelement ausgebildet und auf dem Substrat der Überstromschutzeinrichtung angeordnet sein. Der Temperatursensor kann zudem mit der Steuereinheit gekoppelt sein. Falls die Temperatur der Versorgungsleitung und/oder des Schaltelements einen vorbestimmten Schwellenwert überschreitet, kann die Versorgungseinheit mit der Schalteinheit getrennt werden.

Die erfindungsgemäße elektrische Verbindungsvorrichtung für ein Kraftfahrzeug umfasst eine Versorgungsleitung zum elektrischen Verbinden einer elektrischen Energiequelle mit einem elektrischen Verbraucher, welcher in und/oder an einem Lenkrad, welches zu einem feststehenden Teil einer Lenksäule drehbar ist, angeordnet ist, wobei sich die elektrische Versorgungsleitung entlang dem feststehenden Teil der Lenksäule zu dem Lenkrad erstreckt, und eine erfindungsgemäße Überstromschutzeinrichtung.

Das erfindungsgemäße Kraftfahrzeug umfasst die erfindungsgemäße elektrische Verbindungsvorrichtung. Das Kraftfahrzeug ist insbesondere als Personenkraftwagen ausgebildet.

Bevorzugt weist das Kraftfahrzeug ein Steuergerät auf, welches dazu ausgelegt ist, die Überstromschutzeinrichtung in einem Ruhezustand des Kraftfahrzeugs zu aktivieren. In dem Ruhezustand kann das Kraftfahrzeug abgestellt sein und/oder eine Zündung des Kraftfahrzeugs deaktiviert sein. In diesem Zustand bleibt die Überstromschutzeinrichtung weiterhin aktiv und kann die Versorgungsleitung bezüglich eines Überstroms überwachen. Somit können elektrische Verbraucher des Kraftfahrzeugs, die auch im Ruhezustand des Kraftfahrzeugs mit elektrischer Energie versorgt werden, zuverlässig betrieben werden.

Die mit Bezug auf das die erfindungsgemäße Überstromschutzeinrichtung vorgestellten bevorzugten Ausführungsformen und deren Vorteile gelten entsprechend für die erfindungsgemäße elektrische Verbindungsvorrichtung sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder aber in Alleinstellung anwendbar.

Die Erfindung wird nun anhand eines bevorzugten Ausführungsbeispiels sowie unter Bezugnahme auf die beigefügte Zeichnung näher erläutet.

Dabei zeigt die Fig. eine schematische Darstellung einer elektrischen Verbindungsvorrichtung gemäß einer Ausführungsform der Erfindung.

Die Fig. zeigt eine schematische Darstellung einer elektrischen Verbindungsvorrichtung 1 für ein Kraftfahrzeug. Die elektrische Verbindungsvorrichtung 1 umfasst eine Versorgungsleitung 2. Mit der Versorgungsleitung 2 kann ein elektrischer Verbraucher des Kraftfahrzeugs mit elektrischer Energie versorgt werden. Die Versorgungsleitung 2 dient der elektrischen Verbindung zwischen dem elektrischen Verbraucher und einem elektrischen Energiespeicher des Kraftfahrzeugs, beispielsweise der Batterie des Kraftfahrzeugs. Der elektrische Verbraucher kann beispielsweise als Steuergerät ausgebildet sein und kann in und/oder an einem Lenkrad des Kraftfahrzeugs angeordnet sein. Der elektrische Verbraucher bzw. das Steuergerät umfasst entsprechende Bedienelemente für den Fahrer des Kraftfahrzeugs.

Insbesondere verläuft die Versorgungsleitung 2 von einem feststehenden Teil der Lenksäule des Kraftfahrzeugs zu dem Lenkrad, das relativ zu dem feststehenden Teil der Lenksäule drehbar ist. Anstelle eines Lenkrads kann auch eine beliebig ausgestaltete Lenkhandhabe verwendet werden. Die Versorgungsleitung 2 kann beispielsweise als Wickelfeder bzw. als Wickelfederkassette ausgebildet sein. Durch einen Überstrom kann diese Wickelfederkassette schnell überlastet und somit beschädigt werden. Das Steuergerät kann von der Versorgungsleitung 2 kontinuierlich mit elektrischer Energie versorgt werden. Dabei kann es auch vorgesehen sein, dass der elektrische Verbraucher bzw. das Steuergerät dann mit Strom versorgt wird, wenn sich das Fahrzeug im Ruhezustand befindet, also die Zündung ausgeschaltet ist, da das zu versorgende Steuergerät im Lenkrad Bedienelemente beinhaltet, welche auch im Ruhezustand des Kraftfahrzeugs funktionieren sollen.

Um die elektrische Versorgungsleitung 2 bzw. die Wickelfederkassette vor Überströmen zu schützen, umfasst die elektrische Verbindungsvorrichtung 1 eine Überstromschutzeinrichtung 16. Die Versorgungsleitung 2 weist vorliegend einen in die Überstromschutzeinrichtung 16 eingehenden Bereich und einen aus der Überstromschutzeinrichtung 16 ausgehenden Bereich auf. Die Überstromschutzeinrichtung 16 umfasst wiederum eine Schalteinheit 3, mit der die Versorgungsleitung 2 getrennt oder geschlossen werden kann. Wenn die Schalteinheit 3 geöffnet ist, ist die Versorgungsleitung 2 galvanisch getrennt. Falls die Schalteinheit 3 geschlossen ist, ist die Versorgungsleitung 2 elektrisch verbunden und es kann ein Stromfluss entlang der Versorgungsleitung 2 erfolgen. Die Schalteinheit 3 kann beispielsweise als Feldeffekttransistor, insbesondere als MOSFET, ausgebildet sein.

Des Weiteren umfasst die Überstromschutzeinrichtung 16 eine Erfassungseinheit 4, die insbesondere als Stromsensor ausgebildet ist. Die Erfassungseinheit 4 ist als Halbleiterbauelementausgebildet. Des Weiteren umfasst die Überstromschutzeinrichtung 16 eine Steuereinheit 5. Die Steuereinheit 5 ist mit der Erfassungseinheit 4 zur Datenübertragung verbunden. Falls der mit der Erfassungseinheit 4 erfasste elektrische Strom, der durch die Versorgungsleitung 2 fließt, einen vorbestimmten Schwellenwert überschreitet, wird mit der Steuereinheit 5 ein entsprechendes Steuersignal an die Schalteinheit 3 ausgegeben, in Folge dessen die Schalteinheit 3 geöffnet wird und somit die Versorgungsleitung 2 galvanisch getrennt wird.

Die Steuereinheit 5 der Überstromschutzeinrichtung 16 ist dazu ausgebildet ein Stellsignal von dem Kraftfahrzeug bzw. einem Steuergerät des Kraftfahrzeugs zu empfangen. Insbesondere kann von dem Kraftfahrzeug bzw. dem Steuergerät ein Stellsignal ausgesendet werden, falls das Kraftfahrzeug in den Ruhezustand übergeführt wird. In diesem Zustand bleibt die Überstromschutzeinrichtung 16 aktiv. Somit kann auch im Ruhezustand ein sicherer Betrieb des elektrischen Verbrauchers garantiert werden.

In einer Speichereinheit 10 der Überstromschutzeinrichtung 16 ist der vorbestimmte Schwellenwert für die elektrische Stromstärke gespeichert. Darüber hinaus kann in der Speichereinheit 10 ebenfalls eine zeitliche Dauer gespeichert sein, nach deren Ablauf die Steuereinheit 5 die Schalteinheit 3 nach dem Erfassen des Überstroms mit der Erfassungseinheit 4 ansteuert. Sowohl der Schwellenwert für die Stromstärke als auch die zeitliche Dauer, nach der die Schalteinheit 3 angesteuert wird, können entweder fest vorgegeben sein oder durch ein externes Stellsignal verändert werden. Zu diesem Zweck umfasst die Überstromschutzeinrichtung 16 einen Eingang 13, an dem das externe Stellsignal empfangen werden kann. Das Stellsignal kann mit der Steuereinheit 5 entsprechend ausgewertet werden und anschließend kann ein Eintrag in der Speichereinheit 10, der den Schwellenwert und/oder die zeitliche Dauer beschreibt, entsprechend mittels der Steuereinheit 5 geändert werden.

Weiterhin ist die Steuereinheit 5 dazu ausgelegt, einen Schaltzustand der Schalteinheit 3 zu erfassen. Der Schaltzustand der Schalteinheit 3 beschreibt, ob die Schalteinheit 3 geöffnet oder geschlossen ist. Anhand des Schaltzustands kann die Steuereinheit 5 ein entsprechendes Statussignal erzeugen, welches an dem Ausgang 14 der Überstromschutzeinrichtung 16 ausgegeben wird. Somit kann eine Diagnosemöglichkeit bereitgestellt werden, um den Zustand der Schalteinheit 3 zu erfassen.

Zudem steuert die Steuereinheit 5 die Schalteinheit 3 in Abhängigkeit von einem externen Steuersignal an. Dieses externe Steuersignal wird über den Eingang 15 der Überstromschutzeinrichtung 16 empfangen. Durch das externe Steuersignal kann die Schalteinheit 3 geöffnet bzw. geschlossen werden. Wenn die Schalteinheit 3 beispielsweise nach dem Vorliegen eines Überstroms geöffnet wurde, kann diese durch ein externes Steuersignal wieder geschlossen werden. Dabei ist es auch denkbar, dass die Steuereinheit 5 die Schalteinheit 3 nach Ablauf einer vorbestimmten Zeitdauer wieder schließt, falls die Schalteinheit 3 in Folge eines Überstroms geöffnet wurde.

Des Weiteren umfasst die Überstromschutzeinrichtung 16 weitere Schutzeinrichtungen, mit denen ein zuverlässiger Betrieb der Schalteinheit 3 garantiert werden kann. In der Überstromschutzeinrichtung 16 ist eine Überspannungsschutzeinheit 6 vorgesehen, die dazu ausgebildet ist, eine Überspannung, die an der Schalteinheit 3 anliegt, abzuleiten. Zudem umfasst die Überstromschutzeinrichtung 16 eine ESD-Schutzeinheit 7, die dazu ausgebildet ist, eine elektrostatische Entladung (electrostatic discharge, ESD) abzuleiten.

Zudem umfasst die Überstromschutzeinrichtung 16 einen Temperatursensor 9, der dazu ausgebildet ist, die Temperatur der Schalteinheit 3 und/oder der Versorgungsleitung 2 zu erfassen. Der Temperatursensor 9 kann in unmittelbarer Nähe zu der Überstromschutzeinrichtung 16 angeordnet sein. Der Temperatursensor 9 kann auch in der Überstromschutzeinrichtung 16 angeordnet sein. Falls die mit dem Temperatursensor 9 erfasste Temperatur einen vorbestimmten Temperaturschwellenwert überschreitet, kann dies mit der Steuereinheit 5 erfasst und entsprechendes Signal erzeugt werden. In Folge dessen kann die Steuereinheit 5 die Schalteinheit 3 entsprechend ansteuern. Zudem ist in der Überstromschutzeinrichtung 16 eine Schutzeinheit 11 vorgesehen, die zum Schutz der Gate-Elektrode der Schalteinheit 3 dient. Mit der Schutzeinheit 11 kann verhindert werden, dass an der Gate-Elektrode eine zu hohe elektrische Spannung anliegt, die einen vorbestimmten Schwellenwert überschreitet. Darüber hinaus ist eine weitere Schutzeinheit 12 vorgesehen, die dazu ausgebildet ist, eine induktive Last abzuleiten. Eine der Schutzeinheiten 11 und 12 kann auch eine Strombegrenzungseinheit umfassen. Die Schutzeinheiten 11 und 12 sind mit der Steuereinheit 5 verbunden und die Steuereinheit 5 ist dazu ausgebildet, in Folge der Signale der Schutzeinheiten 11, 12 die Schalteinheit 3 anzusteuern.

Vorliegend weist die Überstromschutzeinrichtung 16 zusätzlich eine Versorgungseinheit 8 auf, die elektrisch mit der Versorgungsleitung 2 verbunden ist. Somit wird elektrische Energie von der Versorgungsleitung 2 an die interne Versorgungseinheit 8, beispielsweise über einen Spannungswandler, übertragen. Somit kann die Überstromschutzeinrichtung 16 mit elektrischer Energie aus der Versorgungsleitung 2 versorgt werden. Vorliegend wir die Überstromschutzeinrichtung 16 mit einer positiven Spannung aus der Versorgtangsleitung 2 versorgt. Diese positive Versorgungsspannung kann beispielsweise an einem Pluspol der Fahrzeugbatterie anliegen und somit ein positives Potenzial gegenüber einem Masseanschluss 17 bereitstellen. In gleicher Weise kann die Überstromschutzeinrichtung 16 mit einer negativen Spannung, beispielsweise von einem Minuspol der Fahrzeugbatterie, versorgt werden. Insbesondere ist die Überstromschutzeinrichtung 16 dazu ausgebildet, mit Versorgungsspannungen, wie sie im Automobilbereich üblich sind, versorgt zu werden. Diese Versorgungsspannungen können beispielsweise bis zu 45 V betragen.

In dem vorliegenden Ausführungsbeispiel kann nur ein Strompfad, nämlich die Versorgungsleitung 2, mit der Schalteinheit 3 getrennt bzw. unterbrochen werden. Die Überstromschutzeinrichtung 16 kann auch derart ausgebildet sein, dass mit ihr mehrere Leitungen geöffnet bzw. unterbrochen werden können. Darüber hinaus kann die Überstromschutzeinrichtung 16 derart ausgebildet sein, dass die Schalteinheit 3 automatisch geöffnet wird, falls die durch die Versorgungsleitung 2 bereitgestellte Versorgungsspannung einen vorbestimmten Schwellenwert unterschreitet. Dieser Schwellenwert kann beispielsweise bei 6 V liegen.

Die Überstromschutzeinrichtung 16 ist als halbleiterbasiertes Bauelement ausgebildet. Das heißt, die einzelnen Komponenten der Überstromschutzeinrichtung 16 sind als Halbleiterbauelemente ausgebildet. Bevorzugt sind sie alle auf einem gemeinsamen Substrat angeordnet. Die Überstromschutzeinrichtung 16 und ihre zuvor beschriebenen Komponenten können als integrierte Schaltkreise ausgebildet sein. Somit kann eine Bauraum sparende Überstromschutzeinrichtung 16 bereitgestellt werden. Zudem kann in vorteilhafter und kostengünstiger Weise erreicht werden, dass Versorgungsklemmen, Versorgungsleitungen und Verbraucher im Kraftfahrzeug mit nur einem oder wenigen Bauelementen gleichzeitig innerhalb enger technischer Grenzen auf Überstrom überwacht werden können. Ferner wird dafür der stromverbrauchsintensive Betrieb von überwachenden Steuergeräten oder anderen insbesondere im ausgelösten Zustand Strom verbrauchenden Bauelementen, die einen Haltestrom benötigen, nicht notwendig. Somit kann stets ein möglichst geringer Stromverbrauch erreicht werden.

### Bezugszeichen

- 1: Elektrische Verbindungsvorrichtung
- 2: Versorgungsleitung
- 3: Schalteinheit
- 4: Erfassungseinheit
- 5: Steuereinheit
- 6: Überspannungsschutzeinheit
- 7: ESD-Schutzeinheit
- 8: Versorgungseinheit
- 9: Temperatursensor
- 10: Strombegrenzungseinheit
- 11: Schutzeinheit
- 12: Schutzeinheit
- 13: Eingang
- 14: Ausgang
- 15: Eingang
- 16: Überstromschutzeinrichtung
- 17: Masseanschluss

## Patentansprüche

1. Überstromschutzeinrichtung (16) für ein Kraftfahrzeug, mit einer Erfassungseinheit (4) zum Erfassen einer Stromstärke eines durch eine Versorgungsleitung (2) fließenden elektrischen Stroms, wobei die Versorgungsleitung (2) eine elektrische Energiequelle des Kraftfahrzeugs mit einem elektrischen Verbraucher des Kraftfahrzeugs elektrisch verbindet und mit einer Schalteinheit (3) zum Trennen der Versorgungsleitung (2), falls die mit der Erfassungseinheit (4) erfasste Stromstärke einen vorbestimmten Schwellenwert überschreitet und mit einer Steuereinheit (5) zum Verarbeiten der mit der Erfassungseinheit (4) erfassten elektrischen Stromstärke und zum Ansteuern der Schalteinheit (3), wobei die Steuereinheit (5) dazu ausgelegt ist, die Schalteinheit (3) anzusteuern, falls die mit der Erfassungseinheit (4) erfasste Stromstärke den vorbestimmten Schwellenwert überschreitet,
**dadurch gekennzeichnet, dass**
der vorgegebenen Schwellenwert in der Steuereinheit (5) hinterlegt ist und die Steuereinheit (5) dazu ausgelegt ist, den Schwellenwert in Abhängigkeit von einem externen Stellsignal zu verändern.

2. Überstromschutzeinrichtung (16) nach Anspruch 1,
**dadurch gekennzeichnet, dass**
die Steuereinheit (5) dazu ausgelegt ist, die Schalteinheit (3) nach einer vorbestimmten zeitlichen Dauer anzusteuern, falls die mit der Erfassungseinheit (4) erfasste Stromstärke den vorbestimmten Schwellenwert überschreitet.

3. Überstromschutzeinrichtung (16) nach Anspruch 2,
**dadurch gekennzeichnet, dass**
die Steuereinheit (5) zusätzlich dazu ausgelegt ist, die vorbestimmte zeitliche Dauer in Abhängigkeit von dem externen Stellsignal anzupassen.

4. Überstromschutzeinrichtung (16) nach einem der vorhergehenden Ansprüche,
**dadurch gekennzeichnet, dass**
die Überstromschutzeinrichtung (16) elektrisch mit der Versorgungsleitung (2) verbindbar ist und die Überstromschutzeinrichtung (16) mit elektrischer Energie aus der Versorgungsleitung (2) versorgbar ist.

5. Überstromschutzeinrichtung (16) nach einem der vorhergehenden Ansprüche,
**dadurch gekennzeichnet, dass**
die Erfassungseinheit (4), die Steuereinheit (5) und die Schalteinheit (3) als Halbleiterbauelemente ausgebildet und auf einem gemeinsamen Substrat angeordnet sind.

6. Überstromschutzeinrichtung (16) nach einem der vorhergehenden Ansprüche,
**dadurch gekennzeichnet, dass**
die Steuereinheit (5) dazu ausgelegt ist, einen Schaltzustand der Schalteinheit (3), welcher beschreibt, ob die Versorgungsleitung (2) durch die Schalteinheit (3) getrennt oder geschlossen ist, zu erfassen und den erfassten Schaltzustand in einem Statussignal auszugeben.

7. Überstromschutzeinrichtung (16) nach einem der vorhergehenden Ansprüche,
**dadurch gekennzeichnet, dass**
die Steuereinheit (5) dazu ausgelegt ist, die Schalteinheit (3) in Abhängigkeit von einem externen Steuersignal anzusteuern.

8. Überstromschutzeinrichtung (16) nach einem der vorhergehenden Ansprüche,
**dadurch gekennzeichnet, dass**
die Schalteinheit (3) einen Metall-Oxid-Halbleiter-Feldeffekttransistor umfasst.

9. Überstromschutzeinrichtung (16) nach einem der vorhergehenden Ansprüche,
**dadurch gekennzeichnet, dass**
die Schalteinheit (3) derart ausgelegt ist, dass bei der mittels der Schalteinheit (3) getrennten Versorgungsleitung (2) ein vorbestimmter Spannungsabfall entlang der Schalteinheit (3) vorliegt.

10. Überstromschutzeinrichtung (16) nach einem der vorhergehenden Ansprüche,
**dadurch gekennzeichnet, dass**
die Schalteinheit (3) derart ausgelegt ist, dass bei der mittels der Schalteinheit (3) geschlossenen Versorgungsleitung (2) ein vorbestimmter Spannungsabfall entlang der Schalteinheit (2) vorliegt.

11. Überstromschutzeinrichtung (16) nach einem der vorhergehenden Ansprüche,
**dadurch gekennzeichnet, dass**
die Überstromschutzeinrichtung (16) eine Überspannungsschutzeinheit (6) zum Vermeiden einer an der Schalteinheit (3) anliegenden Überspannung umfasst.

12. Überstromschutzeinrichtung (16) nach einem der vorhergehenden Ansprüche,
**dadurch gekennzeichnet, dass**
die Überstromschutzeinrichtung (16) einen Temperatursensor (9) zum Erfassen einer Temperatur der Versorgungsleitung (2) und/oder der Schalteinheit (3) umfasst.

13. Elektrische Verbindungsvorrichtung (1) für ein Kraftfahrzeug, mit einer Versorgungsleitung (2) zum elektrischen Verbinden einer elektrischen Energiequelle mit einem elektrischen Verbraucher, welcher in und/oder an einem Lenkrad, welches zu einem feststehenden Teil einer Lenksäule drehbar ist, angeordnet ist, wobei sich die elektrische Versorgungsleitung (2) entlang dem feststehenden Teil der Lenksäule zu dem Lenkrad erstreckt, und mit einer Überstromschutzeinrichtung nach einem der vorhergehenden Ansprüche.

14. Kraftfahrzeug mit einer elektrischen Verbindungsvorrichtung (1) nach Anspruch 13.

15. Kraftfahrzeug nach Anspruch 14,
**dadurch gekennzeichnet, dass**
das Kraftfahrzeug ein Steuergerät aufweist, welches dazu ausgelegt ist, die Überstromschutzeinrichtung (16) in einem Ruhezustand des Kraftfahrzeugs zu aktivieren.
